# EUROPÄISCHE PATENTANMELDUNG

(11) **EP 2 287 501 A1**
(43) Veröffentlichungstag der Anmeldung: **23.02.2011**
(21) Anmeldenummer: 09168142.9
(22) Anmeldetag: 19.08.2009
(51) Int. Cl.: F16K 1/44, F16K 3/18, F16K 51/02, F16K 3/08

(54) **Ventil zum im Wesentlichen gasdichten Unterbrechen eines Fliesswegs**

(71) Anmelder: VAT Holding AG, 9469 Haag (CH)
(72) Erfinder: Lamprecht, Michael, 6841 Mäder (AT)
(74) Vertreter: Kaminski Harmann

(57) **Zusammenfassung**

Die Erfindung betrifft ein Ventil zum gasdichten Unterbrechen eines Fliesswegs (F). Das Ventil besitzt ein Ventilgehäuse (1), einen Ventilteller (5) und einen Antrieb (7), mittels welchem der Ventilteller (5) zwischen einer Offenstellung (O) und einer Geschlossenstellung (C) verstellbar ist. Erfindungsgemäss weist das Ventil einen Dichtungsträger (30) auf, der in einer Kopplungsposition (K) mit einer ersten Aufnahme (21) des Ventiltellers (5) am Ventilteller (5) und in einer Parkposition (P) mit einer zweiten Aufnahme (22) eines Parkabschnitts (8) im Parkabschnitt (8) des Ventilgehäuses (1) koppelbar und wieder entkoppelbar ist. Eine erste Dichtung (31) ist derart auf dem Dichtungsträger (30) angeordnet, dass die erste Dichtung (31) in der Kopplungsposition (K) und in der Geschlossenstellung (C) einen Ventilsitz (4) gasdichtend berührt, wobei eine gasdichte Verbindung zwischen der ersten Dichtung (31) und einer auf dem Ventilteller (5) angeordneten Schliessfläche (13) besteht. Mittels erster Kopplungsmittel (33) ist der Dichtungsträger (30) lösbar mit der ersten Aufnahme (21) des Ventiltellers (5) in der Kopplungsposition (K) koppelbar. Mittels zweiter Kopplungsmittel (34) ist der Dichtungsträger (30) lösbar mit der zweiten Aufnahme (22) des Parkabschnitts (8) in der Parkposition (P) koppelbar.

## Beschreibung

Die Erfindung betrifft ein Ventil zum im Wesentlichen gasdichten Unterbrechen eines Fliesswegs gemäss dem Oberbegriff des Anspruchs 1. Derartige Ventile, insbesondere in Form von Pendelventilen bzw. Schieberventilen, werden vor allem in der Vakuumtechnik verwendet.

Ventile der eingangs genannten Art sind in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzet, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Aus dem Stand der Technik sind unterschiedliche Antriebssysteme zur Erzielung diese Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Aus der US 2007/0138424 (Geiser) und der US 2007/0138425 (Geiser) ist ein Ventil, insbesondere ein Pendel- oder Schieberventil, zum im Wesentlichen gasdichten Unterbrechen eines Fliesswegs bekannt. Das Ventil umfasst ein Ventilgehäuse mit einer ersten Wand, die eine erste Öffnung und einen ersten Ventilsitz aufweist, einen Ventilteller mit einer Verschlussseite mit einem Abdichtring und mindestens einen Antrieb. Mittels des Antriebs ist der Ventilteller von einer geöffneten Position im Wesentlichen parallel zum ersten Ventilsitz schwenkbar oder verschiebbar und der senkrechte Abstand zwischen dem Ventilteller und dem ersten Ventilsitz derart verringerbar, dass durch einen axial dichtenden Kontakt zwischen dem Abdichtring und dem ersten Ventilsitz der Fliessweg in der geschlossenen Position im Wesentlichen gasdicht unterbrochen ist. Der Ventilteller umfasst einen äusseren Tellerabschnitt, der mit dem Antrieb verbunden ist und den Abdichtring in senkrechter Richtung zum ersten Ventilsitz fixiert, und einen inneren Tellerabschnitt, der eine Aussenumfangsfläche aufweist und der relativ zum äusseren Tellerabschnitt in einer zum ersten Ventilsitz im Wesentlichen senkrechten Richtung bewegbar gelagert ist. Die Aussenumfangsfläche ist von dem Abdichtring im Wesentlichen gasdicht innendichtend umschlossen. Somit wirkt in der geschlossenen Position eine Druckdifferenz am Ventilteller im Wesentlichen auf den inneren Tellerabschnitt, so dass sich der innere Tellerabschnitt senkrecht entkoppelt von dem äusseren Tellerabschnitt auf einen Abschnitt des Ventilgehäuses, insbesondere den ersten Ventilsitz oder eine seitliche Nut, abstützt.

Weiters sind Schieberventile bekannt, bei welchen der Schliess- und Dichtvorgang über eine einzige lineare Bewegung erfolgt. Dies sind beispielsweise in diversen Ausführungsformen beschrieben Keilventile oder beispielsweise das unter der Produktbezeichnung "MONOVAT Reihe 02 und 03" bekannte und als Rechteckinsertventil ausgestaltete Transferventil der Firma VAT Vakuumventile AG in Haag, Schweiz. Der Aufbau und die Funktionsweise eines solchen Ventils werden beispielsweise in der US 4,809,950 (Geiser) und der US 4,881,717 (Geiser) beschrieben.

Unterschiedliche Dichtvorrichtungen sind im Stand der Technik beschrieben, beispielsweise in der US 6,629,682 B2 (Duelli). Ein geeignetes Material für Dichtungsringe ist beispielsweise das unter dem Handelsnamen Viton® bekannte elastische Dichtungsmaterial.

Zu unterscheiden ist zwischen dynamischen Dichtungen und statischen Dichtungen am Vakuumventil.

Statische Dichtungen sind nicht unmittelbar beim Vorgang des gasdichten Schliessens eines Ventils beteiligt. Sie befinden sich insbesondere an den Anschlüssen des Vakuumventils, also beispielsweise zwischen dem Vakuumventil-Anschluss und einer Vakuumeinrichtung, z.B. einer Prozesskammer, einer Transportkammer, einer Vakuumpumpe oder einem Rohrleitungssystem, an welchem das Vakuumventil angeschlossen ist. Statische Dichtungen unterliegen in der Regel einer geringeren mechanischen Belastung als dynamische Dichtungen, da nach der Montage des Vakuumventils an der Vakuumeinrichtung die auf die Dichtung wirkenden Kräfte im Wesentlichen konstant sind und der gasdichte Kontakt nach erfolgter Montage des Vakuumventils über einen längeren Zeitraum erhalten bleibt. Ausserdem sind sie dem - eventuell aggressiven - durchströmenden Medium im Inneren des Ventilgehäuses weniger ausgesetzt. Chemische und abrasive Einflüsse auf statische Dichtungen sind in der Regel geringer als bei dynamischen Dichtungen.

Dynamische Dichtungen dienen insbesondere zur gasdichten Abdichtung zwischen dem Ventilsitz und dem bewegbaren Ventilverschluss, beispielsweise dem Ventilteller. Bei Betätigung des Ventils und gasdichten Schliessen und wieder Öffnen sind dynamische Dichtungen einer dynamischen Belastung ausgesetzt und unterliegen somit zwangsläufig einem gewissen mechanischen Verschleiss. Ausserdem sind dynamische Dichtungen dem Medium, welches das Ventil durchströmt, in einem wesentlichen Mass ausgesetzt. Dies ist vor allem bei Zwischenstellungen des Ventilverschlusses der Fall, da in diesem Fall das Medium unmittelbar an der dynamischen Dichtung vorbei strömt. Um die dynamische Dichtung bei vollständig geöffnetem Ventilverschluss zu schonen und sie nicht dem Durchfluss des Mediums unmittelbar auszusetzen, sehen aus dem Stand der Technik bekannte Vakuumventile zum Teil zumindest teilweise geschützte Bereiche im Ventilgehäuse vor, in welchen der Ventilverschluss in seiner vollständigen Offenstellung aus dem unmittelbaren Durchflussbereich hinaus geschwenkt ist. Wird ein solches Ventil jedoch in einer Stellung betrieben, in welcher sich der Ventilverschluss in einer Zwischenstellung zwischen der vollständigen Offenstellung und der gasdichten Geschlossenstellung befindet, so dass der Öffnungsquerschnitt lediglich reduziert ist, ist die dynamische Dichtung zwangsläufig dem das Ventil durchströmenden Medium ausgesetzt, wodurch es aufgrund chemischer Effekte sowie aufgrund Abrasion zu einem erhöhten Verschleiss der dynamischen Dichtung kommt.

In zahlreichen Prozessen kommen aggressive Gase - beispielsweise ein aggressiver Plasmastrom - zum Einsatz, welche den Dichtstoff chemisch in erheblichem Mass angreifen. Insbesondere bei Ätzprozessen oder Beschichtungsprozessen im Bereich der Halbleiterindustrie wird der Durchfluss eines aggressiven Gases durch die Prozess-Vakuumkammer, in welcher der Ätz- bzw. Beschichtungsprozess stattfindet, mittels eines Peripherieventils geregelt. Als Peripherieventil wird vorzugsweise ein Pendelventil eingesetzt. Das Regeln des Durchflusses des aggressiven Gases erfolgt durch Verkleinern und Vergrössern des Öffnungsquerschnitts des Ventils. Während des Bearbeitungsprozesses, in welchem sich das Ventil in diesem Regelbetrieb befindet, wird das Ventil zwar regelmässig verstellt, jedoch ist ein vollständiges Schliessen des Ventils nicht erforderlich. Da der Ventilteller mit dessen Dichtung in den Zwischenstellungen zwischen der Offenstellung und der Geschlossenstellung stets in den Öffnungsquerschnitt des Ventils ragt und das aggressive Gas an dem Ventilteller und dessen Dichtung vorbei strömt, werden in diesem Regelbetrieb sowohl der Ventilteller als auch dessen Dichtung von dem aggressiven Gas massiv chemisch beeinflusst. Wohingegen bei derartigen Prozessen der Regelbetrieb etwa 95% der Einsatzzeit des Ventils ausmacht, bildet der Schliessbetrieb nur 5% des Zeitanteils. Das gasdichte Schliessen muss hierbei lediglich bei Service- und Reinigungsarbeiten erfolgen. Untersuchungen haben gezeigt, dass bei Prozessen im Bereich der IC-, Halbleiter- oder Substratfertigung, bei welchen zum Regeln eingesetzte Peripherieventile zum Einsatz kommen, das Verhältnis der Regelzyklen des Ventils zu den Schliesszyklen etwa 2.000.000 zu 50 beträgt. Der Anteil der Zyklen, in welchen das Ventil also nicht zum gasdichten Schliessen, sondern zum Verkleinern und Vergrössern des Ventil-Öffnungsquerschnitts eingesetzt wird, überwiegt somit drastisch. Trotz der nur gelegentlichen Verwendung der dynamischen Dichtung und obwohl die Dichtung keiner oder kaum einer mechanischen Belastung durch das Schliessen des Ventils ausgesetzt worden ist, muss diese aufgrund dieser chemischen Angriffe in regelmässigen Abständen somit ausgetauscht werden. Abhängig vom Prozess muss das Austauschen der dynamischen Dichtung wöchentlich erfolgen. Dies kostet Zeit und führt zu einem Unterbruch des Fertigungsprozesses.

Durch Fortschreiten der Halbleitertechnologie sind auch die Anforderungen an die Vakuumventiltechnik in den letzten Jahren stetig gestiegen. Neue Halbleiterfertigungsverfahren fordern somit ein Austauschen der Dichtungen eines Vakuumventils in sogar noch kürzeren Intervallen. Die bisher aus dem Stand der Technik bekannten Vakuumventile ermöglichen teilweise ein Austauschen der Dichtung, beispielsweise durch Austauschen des als statische Dichtung ausgebildeten O-Rings. Vakuumventile, deren Anschlusse hingegen über aufvulkanisierte statische Dichtungen verfügen, machen einen raschen Austausch der Dichtung jedoch unmöglich, so dass zum Teil der gesamte Ventilteller ausgetauscht werden muss.

Aus diesem Grunde sind Vakuumventile der genannten Art regelmässig derart aufgebaut, dass ein einfaches Austauschen der dynamischen Dichtung möglich ist, beispielsweise durch Entfernen des Ventiltellers, auf welchem die Dichtung angeordnet ist, und Ersetzen des Ventiltellers gegen einen neuen Ventilteller. Ein hierfür ausgelegtes
Vakuumschieberventil, das eine Wartungsöffnung zum einfachen Entfernen des Ventiltellers sowie eine zum schnellen
Austausch geeignete Schnittstelle zwischen dem Ventilteller und der Schubstange des Ventilantriebs vorsieht, sowie ein passendes Multifunktionswerkzeug ist in der US 7,134,642 (Seitz) beschrieben.

Doch selbst ein relativ schnelles und einfaches Austauschen der Dichtung bzw. der Dichtungen oder des gesamten Ventilverschlusses erfordert eine Unterbrechung des Prozesses, unter Umständen ein Fluten der Kammern mit Umgebungsluft und den Einsatz von Ersatzteilen. Wünschenswert wäre die Erhöhung der Lebensdauer der Dichtungen und somit eine Erhöhung der Wartungs- und Austauschintervalle.

Eine Aufgabe der Erfindung ist es daher, ein Ventil zum im Wesentlichen gasdichten Unterbrechen eines Fliesswegs zur Verfügung zu stellen, dessen dynamische Dichtung eine erhöhte Lebensdauer aufweist.

Eine weitere Aufgabe der Erfindung stellt die derartige Verbesserung der beschriebenen, aus dem Stand der Technik bekannten Ventile dar, dass die Lebensdauer der dynamischen Dichtung des Ventils erhöht wird.

Eine weitere Aufgabe der Erfindung besteht darin, ein Ventil zur Verfügung zu stellen, dessen dynamische Dichtung in der Offenstellung und in der Zwischenstellung des Ventiltellers von dem Medium, von welchem das Ventil durchströmt wird, nur bedingt oder gar nicht angegriffen wird.

Diese Aufgaben werden durch die Verwirklichung der kennzeichnenden Merkmale des unabhängigen Patentanspruchs gelöst. Merkmale, die die Erfindung in alternativer oder vorteilhafter Weise weiterbilden, sind den abhängigen Patentansprüchen zu entnehmen.

Die Erfindung beruht darauf, einen Dichtungsträger vorzusehen, der mit dem Ventilteller und mit einem Parkabschnitt des Ventilgehäuses koppelbar und wieder entkoppelbar ist. Um die Ventilöffnung mittels des Ventiltellers gasdicht verschliessen zu können, ist der Dichtungsträger mit dessen ersten Dichtung, die als dynamische Dichtung dient, in der sogenannten Kopplungsposition auf dem Ventilteller angeordnet, so dass der Ventilteller mit der ersten Dichtung zum gasdichten Schliessen der Ventilöffnung auf den Ventilsitz gedrückt werden kann. Ist hingegen kein gasdichtes Schliessen mittels des Ventiltellers erforderlich, sondern soll der Querschnitt der Ventilöffnung lediglich reduziert und der Fliessweg nur teilweise unterbrochen werden, lässt sich der Dichtungsträger mit der ersten Dichtung vom Ventilteller entkoppeln und in der sogenannten Parkposition mit dem Parkabschnitts des Ventilgehäuses koppeln. Befindet sich der Dichtungsträger in dieser Parkposition, ist die dynamische erste Dichtung vor dem das Ventil durchströmenden Medium geschützt. Der von dem Dichtungsträger und der ersten Dichtung entkoppelte Ventilteller kann nun zum Regeln des Durchflusses durch zumindest teilweises Überdecken des Querschnitts der Ventilöffnung und somit durch Verkleinern und Vergrössern des Öffnungsquerschnitts eingesetzt werden, wobei die erste Dichtung dem das Ventil durchströmenden Medium nicht unmittelbar ausgesetzt ist.

Das erfindungsgemässe Ventil ist somit in zwei Betriebarten betreibbar, nämlich einer ersten Betriebsart zum Verkleinern und Vergrössern des Öffnungsquerschnitts, wobei ein gasdichtes Schliessen nicht erfolgt, und einer zweiten Betriebsart zum vollständigen gasdichten Schliessen des Ventils. Da in der ersten Betriebsart, in welcher sich der Dichtungsträger in der Parkposition befindet, die erste Dichtung dem Durchfluss des Mediums nicht ausgesetzt ist, unterliegt die erste Dichtung in dieser Betriebsart keinem oder kaum einem chemischen oder abrasiven Verschleiss durch das durchströmende Medium. Insbesondere in Anwendungsbereichen, in welchen die erste Betriebart, also der Regelungsbetrieb, dominiert und nur gelegentlich, insbesondere zur Wartung, die zweite Betriebsart zum gasdichten Schliessen des Ventils gewählt wird, wird die Lebensdauer der ersten Dichtung erheblich erhöht. Das erfindungsgemässe Ventil zeichnet sich somit, abhängig von den Anteilen der Betriebsarten, durch eine wesentlich grössere Lebensdauer der dynamischen Dichtung und somit durch wesentlich grössere Wartungsintervalle aus. Die wartungsbedingten Stillstandszeiten der Anlage, in der das erfindungsgemässe Ventil eingesetzt wird, können somit drastisch verringert werden. Eine chemische Beeinflussung des Prozesses durch die Präsenz eines Dichtstoffes sowie eine Generierung von Abrasionspartikeln der dynamischen Dichtung im Regelungsbetrieb kann mittels des erfindungsgemässen Ventils gänzlich vermieden werden.

Das erfindungsgemässe Ventil zum im Wesentlichen gasdichten Unterbrechen eines Fliesswegs besitzt ein Ventilgehäuse, in welchem mindestens eine Ventilöffnung für den Fliessweg vorgesehen ist. Unter dem Fliessweg ist allgemein ein zu schliessender Öffnungspfad zwischen zwei Bereichen - insbesondere zwischen einer Prozesskammer zur Halbleiterfertigung und einer Peripherieeinrichtung wie einer Pumpe, einer weiteren Prozesskammer oder der Aussenwelt - zu verstehen. Der Fliessweg ist beispielsweise ein Verbindungsgang zwischen einer Prozesskammer und einer Pumpe oder zwei miteinander verbundenen Prozesskammern. Bei dem Ventil kann es sich insbesondere um ein Peripherieventil, beispielsweise eine Pendelventil, zur Durchleitung von Gasen oder ein Transferventil zum Transfer von Halbleiterteilen von der einen zur nächsten Prozesskammer oder zur der Aussenwelt handeln. Letztgenannte Ventile werden aufgrund des beschriebenen Anwendungsgebiets auch als Vakuum-Transferventile und aufgrund ihres meist rechteckigen Öffnungsquerschnitts auch als Rechteckschieber bezeichnet. Selbstverständlich ist jedoch auch jede beliebige andere Anwendung des erfindungsgemässen Vakuumventils zum im Wesentlichen gasdichten Schliessen eines beliebigen Fliesswegs möglich.

Die Ventilöffnung hat beispielsweise einen in Wesentlichen runden, ovalen oder rechteckigen Querschnitt und besitzt eine Mittelachse, die sich im Bereich der Ventilöffnung in der Mitte des Fliesswegs parallel zu diesem erstreckt. Diese Öffnungsachse steht beispielsweise senkrecht auf der von der Ventilöffnung aufgespannten Fläche. Die Ventilöffnung wird von einem Ventilsitz umschlossen, der sich rings um die Öffnung erstreckt. Beispielsweise weist die Fläche des Ventilsitzes zumindest teilweise in eine Richtung parallel zur Öffnungsachse.

Ausserdem hat das Ventil einen verstellbaren Ventilteller mit einer Verschlussseite sowie mindestens einen Antrieb, mittels welchem der Ventilteller zwischen einer Offenstellung und einer Geschlossenstellung verstellt werden kann. Das Verstellen zwischen der Offenstellung und der Geschlossenstellung erfolgt über den Antrieb mittels einer zumindest teilweise quer zur Öffnungsachse erfolgenden Querbewegung. In anderen Worten ist der Ventilteller mittels des Antriebs in mindestens eine Richtung schwenkbar oder verschiebbar, die zumindest eine Richtungskomponente senkrecht zur Öffnungsachse aufweist. Diese Richtungskomponente ist in einer möglichen Ausführungsform parallel zu der von dem Ventilsitz aufgespannten Fläche und die Bewegung erfolgt zumindest teilweise parallel zum Ventilsitz, sofern sich dieser senkrecht zur Öffnungsachse erstreckt. Die Erfindung umfasst jedoch nicht nur ein Ventil mit einem einachsigen Antrieb, mittels welchem der Ventilteller entlang einer Achse oder um eine Achse bewegbar ist, sondern vorzugsweise auch mehrachsige Antriebe, mittels welcher der Ventilteller auch entlang mindestens einer oder um mindestens eine zweite Achse bewegbar ist.

Die Verschlussseite des Ventiltellers ist diejenige Seite, welche in der Geschlossenstellung des Ventiltellers auf die Ventilöffnung und insbesondere auf den Ventilsitz weist. In der Offenstellung ist der Ventilteller in einem seitlich neben der Ventilöffnung angeordneten Parkabschnitt des Ventilgehäuses positioniert. Der Parkabschnitt ist allgemein derjenige Bereich des Ventils, in welchem sich der aus dem Öffnungsquerschnitt bewegte Ventilteller neben der Öffnung befindet. In der Offenstellung sind die Ventilöffnung und der Fliessweg freigegeben. Das Ventil ist in der Offenstellung vollständig geöffnet. In der Geschlossenstellung überdeckt der Ventilteller mit einer auf der Verschlussseite angeordneten Schliessfläche die Ventilöffnung. Bei der Schliessfläche handelt es sich um ein beliebiges, insbesondere scheiben-, teller- oder plattenartiges Element oder Segment, mittels welchem der Querschnitt der Ventilöffnung zumindest teilweise überdeckt werden kann. Die Schliessfläche ist entweder fest mit dem Ventilteller verbunden und bildet einen sich auf der Verschlussseite erstreckenden Bestandteil des Ventiltellers, oder sie ist beweglich - insbesondere in Richtung parallel zur Öffnungsachse - auf dem Verschlussteller gelagert, oder sie ist vom Ventilteller entkoppelbar. In der Geschlossenstellung berührt eine erste Dichtung, die als dynamische Dichtung wirkt, den Ventilsitz auf gasdichtende Weise, so dass ein gasdichter Kontakt zwischen der ersten Dichtung und dem Ventilsitz besteht. Der Ventilteller schliesst die Ventilöffnung gasdicht, so dass der Fliessweg unterbrochen ist.

Erfindungsgemäss weist das Ventil einen Dichtungsträger auf, der mindestens zwei typische Positionen einnehmen kann. In der ersten Position ist der Dichtungsträger mit dem Ventilteller gekoppelt und in der zweiten Position ist er mit dem Parkabschnitt gekoppelt, also dort jeweils mechanisch lösbar, temporär fixiert angeordnet.

Die erste Position wird als Kopplungsposition bezeichnet. In der Kopplungsposition des Dichtungsträgers ist selbiger mit einer ersten Aufnahme des Ventiltellers am Ventilteller gekoppelt. Bei der ersten Aufnahme handelt es sich allgemein um ein Element oder einen Abschnitt am Ventilteller, mittels welchem eine Verbindung zwischen dem Dichtungsträger und dem Ventilteller herstellbar ist. Um diese Verbindung lösbar zu fixieren, weist das Ventil erste Kopplungsmittel auf, mittels welcher der Dichtungsträger lösbar mit der ersten Aufnahme des Ventiltellers koppelbar und somit in der Kopplungsposition fixierbar ist. Die Begriffe erste Aufnahme und erste Kopplungsmittel sind funktional zu verstehen. Es ist möglich, die erste Aufnahme und die ersten Kopplungsmittel als ein gemeinsames mechanisches Element auszubilden, wobei die erste Aufnahme und die Kopplungsmittel beide am Ventilteller angeordnet sind. Alternativ besteht jedoch auch die Möglichkeit, dass die erste Aufnahme am Ventilteller zum Aufnehmen des Dichtungsträgers angeordnet ist, wohingegen sich die ersten Kopplungsmittel, beispielsweise eine federbelastete Raste, auf dem Dichtungsträger und/oder auf dem Ventilteller befinden können.

Die zweite Position wird als Parkposition bezeichnet. In dieser Parkposition des Dichtungsträgers ist selbiger mit einer zweiten Aufnahme des Parkabschnitts im Parkabschnitt des Ventilgehäuses gekoppelt. Die zweite Aufnahme ist ein Element oder einen Abschnitt im Parkabschnitt am Ventilgehäuse, mittels welchem eine Verbindung zwischen dem Dichtungsträger und dem Ventilgehäuse herstellbar ist. Um den in der zweiten Aufnahme im Parkabschnitt aufgenommenen Dichtungsträger fixieren zu können, besitzt das Ventil zweite Kopplungsmittel, mittels welcher der Dichtungsträger lösbar mit der zweiten Aufnahme des Parkabschnitts koppelbar und somit in der Parkposition fixierbar ist. Auch die Begriffe zweite Aufnahme und zweite Kopplungsmittel sind funktional zu verstehen, denn die zweite Aufnahme und die zweiten Kopplungsmittel können von einer Funktionseinheit oder mehreren Funktionseinheiten gebildet werden.

Erfindungsgemäss ist die als dynamische Dichtung wirkende erste Dichtung derart auf dem Dichtungsträger angeordnet, dass die erste Dichtung den Ventilsitz gasdichtend berührt, wenn sich der Dichtungsträger auf dem Ventilteller und somit in Kopplungsposition befindet und wenn der Ventilteller mittels des Antriebs in die Geschlossenstellung bewegt worden ist. Somit besteht in der Kopplungsposition und in der gleichzeitigen Geschlossenstellung eine gasdichte Verbindung zwischen der ersten Dichtung und dem Ventilsitz. Ausserdem ist die erste Dichtung derart auf dem Dichtungsträger angeordnet und der Dichtungsträger sowie die Schliessfläche sind derart ausgebildet, dass in dieser Kopplungsposition und in der gleichzeitigen Geschlossenstellung eine gasdichte Verbindung zwischen der ersten Dichtung und der Schliessfläche besteht. In anderen Worten besteht in dieser Geschlossenstellung ein unmittelbarer gasdichter Kontakt zwischen dem Ventilsitz und der ersten Dichtung sowie ein unmittelbarer oder ein mittelbarer Kontakt zwischen der ersten Dichtung und der in sich geschlossenen Schliessfläche.

Ein unmittelbarer Kontakt zwischen der ersten Dichtung und der Schliessfläche kann beispielsweise dadurch bewirkt werden, dass die Schliessfläche auf dem Dichtungsträger angeordnet ist und somit ein gasdichter Kontakt zwischen der ersten Dichtung und der Schliessfläche auf dem Dichtungsträger besteht. Es ist möglich, dass die erste Dichtung direkt auf der Schliessfläche angeordnet ist, indem die erste Dichtung beispielsweise auf dieser Schliessfläche aufvulkanisiert oder in einer Nut auf der Schliessfläche fixiert ist. Ist die Schliessfläche ein Bestandteil des Dichtungsträgers, wird das gasdichte Dichten der Ventilöffnung und das Unterbrechen des Fliesswegs durch den Dichtungsträger mit dessen Schliessfläche, welche in der Geschlossenstellung die Ventilöffnung überdeckt, und mit dessen erster Dichtung, welche gasdicht auf dem Ventilsitz aufliegt, bewirkt. Ein mit der Schliessfläche ausgestatteter Dichtungsträger weist insbesondere eine scheiben-, teller- oder plattenartige und in sich flächig geschlossene Form auf, so dass er als Verschluss für die Ventilöffnung dienen kann.

Ein mittelbarer Kontakt zwischen der ersten Dichtung und der Schliessfläche kann beispielsweise dadurch bewirkt werden, dass die Schliessfläche nicht Bestandteil des Dichtungsträgers ist, sondern auf dem Ventilteller fest oder beweglich angeordnet ist. In diesem Falle weist das Ventil Dichtungsmittel auf, die den Dichtungsträger und die Schliessfläche in der Kopplungsposition und in der
Geschlossenstellung gasdichtend verbinden. Hierzu sind in einer möglichen Ausführungsform die Dichtungsmittel auf einer zumindest teilweise radial nach innen weisenden Innenfläche des insbesondere ringförmigen Dichtungsträgers derart angeordnet, dass die Dichtungsmittel in der Kopplungsposition eine zumindest teilweise radial nach aussen weisende Aussenfläche der Schliessfläche im Wesentlichen radial gasdichtend umschliessen. Diese Schliessfläche kann fest auf dem Ventilteller angeordnet sein und insbesondere scheibenartige Form mit einer radial nach aussen weisenden Umrandung haben, welche als die Aussenfläche der Schliessfläche wirkt. Alternativ ist die Schliessfläche jedoch beweglich auf dem Ventilteller angeordnet. In einer möglichen Ausführungsform ist die Schliessfläche in Richtung senkrecht zur Verschlussseite relativ zum Ventilteller und in der Kopplungsposition relativ zum Dichtungsträger innerhalb eines Bewegungsbereichs bewegbar am Ventilteller gelagert. Insbesondere erfolgt die Lagerung federnd, so dass die Schliessfläche im unbelasteten Zustand in einer Ausgangsstellung innerhalb des Bewegungsbereichs gehalten wird. Die bewegbare Lagerung der Schliessfläche ermöglicht, dass sich die Schliessfläche unmittelbar auf dem Ventilsitz oder auf einem sonstigen Abschnitt des Ventilgehäuses im Falle eines Über- oder Unterdrucks auf einer der Ventilseiten abstützen kann. Eine derartige Beweglichkeit einer Schliessfläche ist beispielsweise aus der US 2007/0138424 (Geiser) bekannt. Damit zumindest in einem Teilbereich dieses Bewegungsbereichs der gasdichte Kontakt zwischen der Aussenfläche der Schliessfläche und den Dichtungsmittels gewährleistet ist, ist die Aussenfläche der Schliessfläche derart dimensioniert, dass sie zumindest innerhalb eines Teilbereichs des Bewegungsbereichs der Schliessfläche von den Dichtungsmitteln in der Kopplungsposition gasdichtend umschlossen ist. Beispielsweise ist die Aussenfläche in Richtung senkrecht zur Verschlussseite mindestens entsprechend dem Bewegungsbereich dimensioniert.

Die genannten Dichtungsmittel können von einer zweiten Dichtung gebildet werden, die auf einer zumindest teilweise radial nach innen weisenden Innenfläche des Dichtungsträgers angeordnet ist und zumindest teilweise nach innen in Radialrichtung weist. In der Kopplungsposition umschliesst diese zweite Dichtung somit eine zumindest teilweise radial nach aussen weisende Aussenfläche der Schliessfläche auf im Wesentlichen radial gasdichtende Weise. Diese zweite Dichtung kann beispielsweise ein in einer Umfangsnut angeordneter O-Ring, ein sonstiger Dichtring oder eine aufvulkanisierte Dichtung sein.

Alternativ werden die genannten Dichtungsmittel von der ersten Dichtung gebildet. In diesem Falle hat die erste Dichtung zwei Dichtungsfunktionen. Die erste Dichtung ist hierzu in einem inneren Randabschnitt einer zumindest teilweise radial nach innen weisenden Innenfläche des Dichtungsträgers angeordnet und berührt mit einem in Axialrichtung weisenden Teilabschnitt in der Geschlossenstellung des Ventiltellers den Ventilsitz auf gasdichtende Weise. Diese Dichtungsfunktion entspricht der üblichen dynamischen Dichtung, wie bereits oben beschrieben. Aufgrund der Anordnung im Randabschnitt umschliesst die erste Dichtung jedoch auch mit einem nach innen zumindest teilweise in Radialrichtung weisenden Teilabschnitt in der Kopplungsposition eine zumindest teilweise radial nach aussen weisende Aussenfläche der Schliessfläche auf im Wesentlichen radial gasdichtende Weise.

Unter radial ist allgemein eine Richtungskomponente zu verstehen, die im Wesentlichen in einer Ebene parallel zur Verschlussseite verläuft, wobei diese Ebenen insbesondere senkrecht von der Öffnungsachse durchstossen wird, wohingegen unter axial allgemein eine Richtungskomponente senkrecht zur Verschlussseite und insbesondere parallel zur Öffnungsachse verstanden wird. Der Begriff radial ist im Rahmen der Erfindung nicht notwendigerweise auf einen kreisförmige Querschnitt bezogen, sondern kann sich auch auf einen rechteckigen, ovalen oder sonstigen Querschnitt beziehen.

In einer speziellen Weiterbildung der Erfindung ist die Schliessfläche auf dem Ventilteller angeordnet und das Ventil weist Dichtungsmittel auf, die den Dichtungsträger und die Schliessfläche in der Kopplungsposition und in der Geschlossenstellung gasdichtend verbinden. Die Dichtungsmittel sind auf einer zumindest teilweise radial nach innen weisenden Innenfläche des Dichtungsträgers derart angeordnet, dass die Dichtungsmittel in der Kopplungsposition eine zumindest teilweise radial nach aussen weisende Aussenfläche der Schliessfläche im Wesentlichen radial gasdichtend umschliessen, wie bereits oben beschrieben. Die Dichtungsmittel können von der ersten Dichtung oder einer zweiten Dichtung, wie oben beschrieben, gebildet werden. Als erste Aufnahme des Ventiltellers dient bei dieser Ausführungsform jedoch die zumindest teilweise radial nach aussen weisende Aussenfläche der Schliessfläche. Die ersten Kopplungsmittel werden in dieser Ausführungsform durch kraftschlüssige erste Kopplungsmittel in Form der Dichtungsmittel, die in Radialrichtung elastisch sind, gebildet. Die Dichtungsmittel umschliessen die Aussenfläche der Schliessfläche in der Kopplungsposition derart elastisch, dass der Dichtungsträger lösbar in der Kopplungsposition auf kraftschlüssige Weise fixierbar ist. In anderen Worten haben die Dichtungsmittel in dieser Ausführungsform nicht nur eine Abdichtfunktion, sondern auch eine Kopplungsfunktion im Sinne der ersten Kopplungsmittel.

In einer Ausführungsform der Erfindung sind die ersten Kopplungsmittel, die erste Aufnahme, die zweiten Kopplungsmittel und die zweite Aufnahme derart ausgebildet, dass das Koppeln des Dichtungsträgers in der Kopplungsposition und der Parkposition und das Entkoppeln durch ein Bewegen des Ventiltellers mittels des Antriebs erfolgen. In anderen Worten ist der Ventilteller mittels des Antriebs derart bewegbar, dass der Dichtungsträger von seiner Kopplungsposition auf dem Ventilteller in seine Parkposition im Parkabschnitt, und umgekehrt, bringbar ist. Hierzu ist der Antrieb beispielsweise derart ausgebildet, dass der Ventilteller zumindest in der Offenstellung in Form einer Senkrechtbewegung in Richtung senkrecht zur Verschlussseite bewegbar ist. Das Koppeln und Entkoppeln des Dichtungsträgers in die und aus der Kopplungsposition und Parkposition erfolgt zumindest teilweise durch die Senkrechtbewegung. In anderen Worten ist der Antrieb nicht nur einachsig, so dass der Ventilteller entlang einer Achse oder um eine Achse bewegbar ist, sondern mehrachsig, so dass der Ventilteller auch entlang mindestens einer oder um mindestens eine zweite Achse, nämlich in Form einer Senkrechtbewegung in Richtung senkrecht zur Verschlussseite, bewegbar ist. Derartige Antriebe sind bei Schiebe- oder Pendelventilen üblich und aus dem Stand der Technik bekann, da die Senkrechtbewegung zum senkrechten Aufdrücken der dynamischen Dichtung auf den Ventilsitz genutzt wird. In einer weiteren Fortbildung der Erfindung ist die zweite Aufnahme des Parkabschnitts derart ausgebildet, dass der Dichtungsträger zumindest teilweise durch diese Senkrechtbewegung in die zweite Aufnahme in die Parkposition hinein und aus der zweiten Aufnahme aus der Parkposition heraus führbar ist. Beispielsweise sind die zweiten Kopplungsmittel als Bajonettverschluss mit mindestens einem Schlitz, der eine Einführung hat, und mindestens einem Knopf ausgebildet. Der Bajonettverschluss ist derart angeordnet und ausgebildet, dass der Knopf mittels des Antriebs durch die Senkrechtbewegung in die Einführung einführbar und durch die Querbewegung in den Schlitz und somit in die Parkposition führbar ist.

In einer speziellen Ausführungsform ist die erste Aufnahme des Ventiltellers als translatorische erste Aufnahme ausgebildet ist, wobei der Dichtungsträger durch die Senkrechtbewegung in die erste Aufnahme in die Kopplungsposition hinein und aus der ersten Aufnahme aus der Kopplungsposition heraus führbar ist. In anderen Worten sind die translatorische erste Aufnahme und die ersten Kopplungsmittel zum Aufnehmen des Dichtungsträgers mittels einer im Wesentlichen geradlinigen Senkrechtbewegung, die in Richtung senkrecht zur Verschlussseite und insbesondere parallel zur Öffnungsachse verläuft, ausgebildet. In einer Weiterbildung dieser Ausführungsform sind die ersten Kopplungsmittel als kraftschlüssige erste Kopplungsmittel ausgebildet, die den Dichtungsträger in der ersten Aufnahme in der Kopplungsposition mit einer Haltekraft bis zur Überwindung der Haltekraft halten. Das Halten erfolgt insbesondere durch Reibschluss. Die Haltekraft ist derart bemessen, dass sie durch die Senkrechtbewegung aus der Aufnahme heraus zum Entkoppeln und in die Aufnahme hinein zum Koppeln mittels des Antriebs überwindbar ist. Beispielsweise werden diese kraftschlüssigen ersten Kopplungsmittel von einer federbelasteten Raste gebildet, die im Dichtungsträger oder in der ersten Aufnahme am Ventilteller angeordnet ist.

Die Erfindung beschränkt sich auf keinen besonderen Ventiltypen. Als besonders Vorteilhaft hat sich die Erfindung jedoch in Form eines Pendelventils erwiesen. In diesem Falle ist haben die Ventilöffnung und der Ventilteller insbesondere einen im Wesentlichen runden Querschnitt. Der Dichtungsträger weist einen ringförmigen oder tellerförmigen Querschnitt auf. Die mittels des Antriebs bewirkte Querbewegung ist eine insbesondere bogenförmige Schwenkbewegung um eine im Wesentlichen parallel zur Öffnungsachse verlaufende Schwenkachse. Die Senkrechtbewegung findet in Form einer Linearbewegung im Wesentlichen parallel zur Öffnungsachse statt. Der Ventilteller ist mittels des Antriebs zwischen der Offenstellung und einer Zwischenstellung durch die Querbewegung schwenkbar. In dieser Zwischenstellung überdeckt der Ventilteller mit der Verschlussseite die Ventilöffnung zumindest teilweise und ist in beabstandeter Gegenüberlage zum Ventilsitz angeordnet. Somit verkleinert der Ventilteller in der Zwischenstellung die Ventilöffnung und unterbricht den Fliessweg zwar aufgrund der beabstandeten Gegenüberlage zum Ventilsitz noch nicht vollständig, aber teilweise. Der Öffnungsquerschnitt des Ventils ist somit - insbesondere wesentlich - reduziert. Ausserdem ist der Antrieb derart ausgebildet, dass der Ventilteller mittels des Antriebs zwischen dieser Zwischenstellung und der Geschlossenstellung durch die Senkrechtbewegung verstellbar ist. Das grundsätzliche Aufbau eines solchen Pendelventils wird beispielsweise in der US 2007/0138424 (Geiser) beschrieben.

Das erfindungsgemässe Ventil kann jedoch auch als Schieberventil ausgebildet sein. In diesem Falle die Ventilöffnung und der Ventilteller beispielsweise einen im Wesentlichen rechteckigen Querschnitt. Der Dichtungsträger weist einen rechteckig rahmenartigen oder rechteckig geschlossenen Querschnitt auf. Die Querbewegung des Antriebs ist eine Linearbewegung entlang einer im Wesentlichen senkrecht zur Öffnungsachse verlaufende, insbesondere geradlinigen Schubachse. Die Senkrechtbewegung ist eine Linearbewegung im Wesentlichen parallel zur Öffnungsachse. Mittels des Antriebs ist der Ventilteller zwischen der Offenstellung und einer Zwischenstellung durch die Querbewegung verschiebbar. In der Zwischenstellung überdeckt der Ventilteller mit der Verschlussseite die Ventilöffnung zumindest teilweise und ist in beabstandeter Gegenüberlage zum Ventilsitz angeordnet. Somit verkleinert der Ventilteller die Ventilöffnung und unterbricht den Fliessweg teilweise, ohne ihn vollständig zu unterbrechen, da der Ventilteller in beabstandeter Gegenüberlage zum Ventilsitz angeordnet ist. Ausserdem ist der Ventilteller mittels des Antriebs zwischen der Zwischenstellung und der Geschlossenstellung durch die Senkrechtbewegung verstellbar.

Erfindungsgemäss kann das Ventil jedoch auch ein mittels nur einer einzigen Querbewegung schliessbares Ventil sein, das ohne Senkrechtbewegung vollständig schliessbar ist, beispielsweise ein Keilventil.

Durch das Entkoppeln des Dichtungsträgers und somit der ersten Dichtung vom Ventilteller kann dieser zum Regeln, also zum Verkleinern und Vergrössern des Öffnungsquerschnitts eingesetzt werden, ohne dass die erste Dichtung, und gegebenenfalls auch die zweite Dichtung, dem Medium, welches das Ventil durchströmt, unmittelbar ausgesetzt ist. Um die zweite Dichtung vollständig von dem Medium abzuschotten, sieht die Erfindung in einer Weiterbildung im Parkabschnitt eine Schutzfläche vor. Diese Schutzfläche ist derart ausgeformt, dass die erste Dichtung in der Parkposition des Dichtungsträgers von der Schutzfläche zum Schutz der ersten Dichtung vor dem entlang dem Fliessweg strömenden Medium umgeben ist. Die Schutzfläche weist beispielsweise eine nutartige Form auf.

Das erfindungsgemässe Ventil macht es möglich, zwei unterschiedliche Betriebsarten vorzusehen, nämlich eine erste Betriebsart zum Regeln des Öffnungsquerschnitts des Ventils, wobei der Öffnungsquerschnitt vollständig geöffnet und wesentlich reduziert, insbesondere nahezu - jedoch nicht gasdicht - verschlossen werden kann, und eine zweite Betriebsart, in welcher das Ventil vollständig geöffnet und vollständig geschlossen werden kann. Der Vorteil der ersten Betriebsart besteht darin, dass die dynamische erste Dichtung in der Parkposition vor chemischen und mechanischen Einflüssen geschützt ist und somit die Lebensdauer der ersten Dichtung drastisch erhöht werden kann.

Zur Umsetzung dieser Betriebsarten weist eine Ausführungsform der Erfindung eine Steuervorrichtung auf, die derart mit dem Antrieb in Verbindung steht und die derart ausgebildet ist, dass das Ventil in der ersten Betriebsart und der zweiten Betriebart betreibbar ist. In der ersten Betriebsart ist der Dichtungsträger in der Parkposition angeordnet und der Ventilteller ist zwischen der Offenstellung und einer Zwischenstellung verstellbar. In der Zwischenstellung überdeckt der Ventilteller mit der Verschlussseite die Ventilöffnung zumindest teilweise, er ist in beabstandeter Gegenüberlage zum Ventilsitz angeordnet und er verkleinert die Ventilöffnung, wobei der Fliessweg teilweise unterbrochen wird. In der zweiten Betriebsart ist der Dichtungsträger in der Kopplungsposition angeordnet und der Ventilteller ist zwischen der Offenstellung und der Geschlossenstellung verstellbar. Das Wechseln der Betriebsarten erfolgt durch derartiges Verstellen des Antriebs, dass der sich in Kopplungsposition oder Parkposition befindende Dichtungsträger von einem der Kopplungsmittel in der jeweiligen Aufnahme festgehalten wird. Beispielsweise erfolgt das Wechseln der Betriebsart durch Einführen eines Abschnitts des Dichtungsträgers in die als Bajonettverschluss ausgebildete zweite Aufnahme und in die als
Bajonettverschluss ausgebildeten zweiten Kopplungsmittel, durch Schwenken des Ventiltellers in einen
Hinterschneidungsbereich des Bajonettverschlusses und durch senkrechtes Verstellen des Ventiltellers, so dass der Dichtungsträger durch Überwinden kraftschlüssiger erster Kopplungsmittel von dem Ventilteller gelöst wird. Durch das Lösen des Dichtungsträgers vom Ventilteller ist er somit im Parkabschnitt in der Parkposition angeordnet. Der Dichtungsträger kann durch umgekehrtes Bewegen des Ventiltellers wieder aus der Parkposition in die Kopplungsposition gebracht werden.

Das erfindungsgemässe Ventil wird nachfolgend anhand von in den Zeichnungen schematisch dargestellten konkreten Ausführungsbeispielen rein beispielhaft näher beschrieben.

Im Einzelnen zeigen
- Fig. 1: eine Schrägansicht auf ein erfindungsgemässes Pendelventil in der Offenstellung;
- Fig. 2: eine detaillierte Schrägansicht auf den Parkabschnitt des geöffneten Ventilgehäuses;
- Fig. 3: eine seitliche Querschnittsansicht auf den Ventilteller in der Geschlossenstellung und den Dichtungsträger in Kopplungsposition;
- Fig. 4a: eine Querschnittsansicht auf den Ventilteller im Parkabschnitt und den Dichtungsträger in Kopplungsposition;
- Fig. 4b: die Querschnittsansicht auf den Ventilteller im Parkabschnitt und den Dichtungsträger in Kopplungsposition beim Übergang in die Parkposition;
- Fig. 4c: die Querschnittsansicht auf den Ventilteller im Parkabschnitt und den Dichtungsträger in Kopplungsposition beim fast erfolgten Übergang in die Parkposition;
- Fig. 4d: die Querschnittsansicht auf den Ventilteller im Parkabschnitt und den Dichtungsträger nach erfolgtem Übergang in die Parkposition;
- Fig. 5a: eine Draufsicht auf den Parkabschnitt, die zweite Aufnahme und den Dichtungsträger in Kopplungsposition beim Übergang in die Parkposition;
- Fig. 5b: eine Draufsicht auf den Parkabschnitt, die zweite Aufnahme und den Dichtungsträger in Kopplungsposition nach erfolgtem Übergang in die Parkposition;
- Fig. 6: eine Querschnittsansicht auf die erste Aufnahme und die als federbelastete Raste ausgebildeten ersten Kopplungsmittel;
- Fig. 7: eine seitliche Querschnittsansicht auf den Ventilteller in einer Zwischenstellung ohne den Dichtungsträger;
- Fig. 8: eine seitliche Querschnittsansicht auf den Ventilteller in der Geschlossenstellung und eine alternativen Dichtungsträger mit einer einzigen Dichtung in Kopplungsposition; und
- Fig. 9: eine seitliche Querschnittsansicht auf den Ventilteller in der Geschlossenstellung und einen alternativen Dichtungsträger mit einer geschlossenen Schliessfläche in Kopplungsposition.

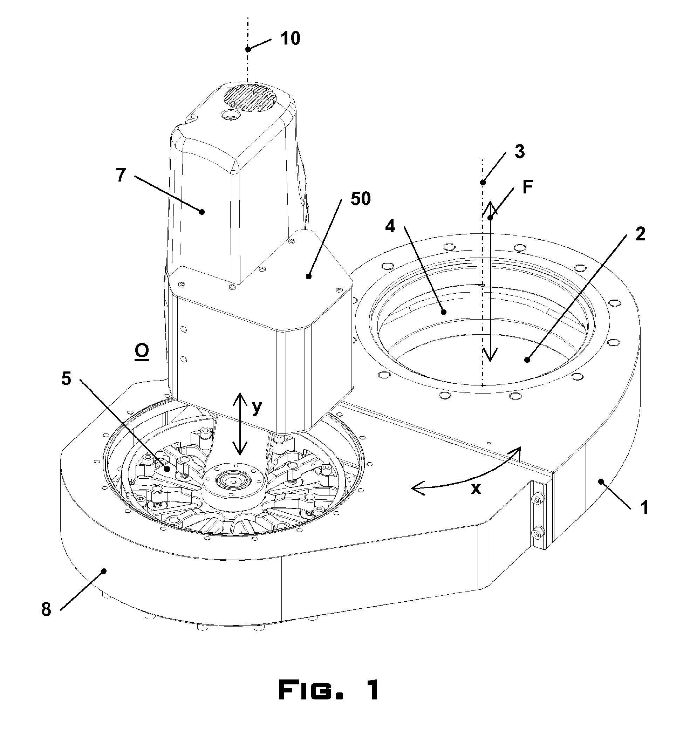

Die Figuren 1, 2, 3, 4a, 4b, 4c, 4d, 5a, 5b, 6 und 7 zeigen eine gemeinsame, exemplarische Ausführungsform eines erfindungsgemässen Pendelventils in unterschiedlichen Zuständen, aus unterschiedlichen Ansichten und in unterschiedlichen Detaillierungsgraden. Daher werden diese Figuren gemeinsam beschrieben, wobei zum Teil auf bereits in vorangegangenen Figuren erläuterte Bezugszeichen und Merkmale nicht erneut eingegangen wird.

Das in den Figuren 1 bis 7 dargestellte Ventil ist als Pendelventil ausgebildet. Das Ventil zum im Wesentlichen gasdichten Unterbrechen eines Fliesswegs F, symbolisiert dargestellt in Figur 1 durch den Pfeil F, besitzt ein Ventilgehäuse 1. In diesem Ventilgehäuse 1 ist eine Ventilöffnung 2 für den Fliessweg F vorgesehen. Die Ventilöffnung 2 hat einen im Wesentlichen runden Querschnitt und erstreckt sich gerade durch das Ventilgehäuse 1 entlang einer geradlinigen Öffnungsachse 3, dargestellt in Figur 1 durch die Strichpunktlinie 3. Auch wenn das Ventil im gezeigten Ausführungsbeispiel zwei in das Ventilinnere führende Öffnungen im Ventilgehäuse 1 aufweist, nämlich eine obere Öffnung und eine untere Öffnung, wird lediglich die untere Öffnung als die Ventilöffnung 2 bezeichnet, da diese Ventilöffnung 2 gasdicht verschliessbar ist. Die Ventilöffnung 2 ist von einem Ventilsitz 4 umschlossen, der von einer ebenen Fläche rings um die Ventilöffnung 2 gebildet wird. Die Ebene des Ventilsitzes 4 wird im gezeigten Ausführungsbeispiel von der Öffnungsachse 3 senkrecht durchstossen.

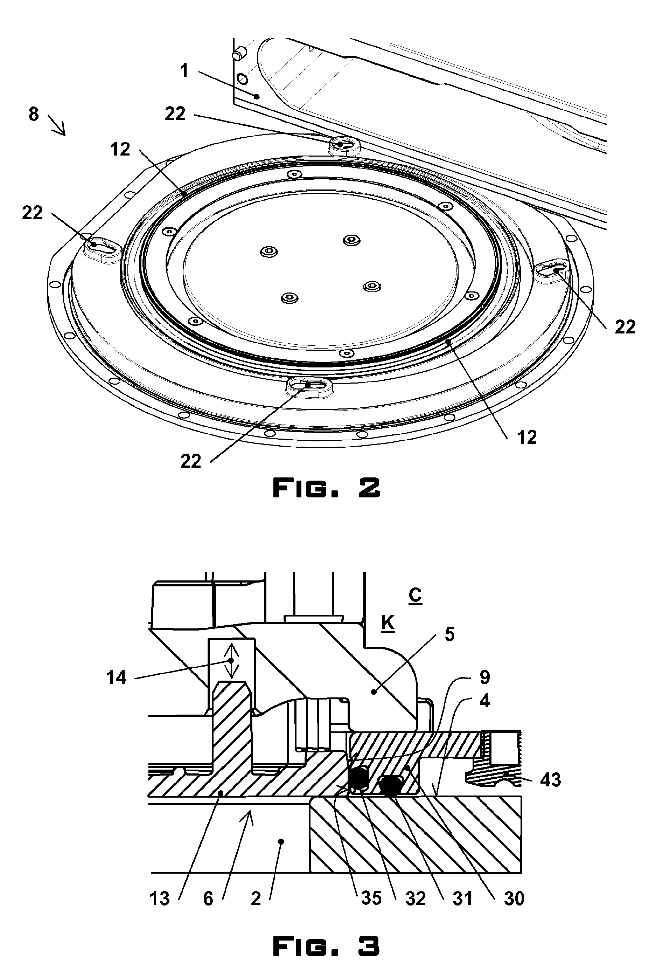

Im Ventilgehäuse 1 ist ein bewegbarer Ventilteller 5 angeordnet, der einen im Wesentlichen runden Querschnitt aufweist. Wie in Figur 1 erkennbar hat der Ventilteller 5 eine strebenartige Grundstruktur und einen Schwenkarm, mittels welchem der Ventilteller mit dem Antrieb 7 gekoppelt ist. An der strebenartigen Grundstruktur des Ventiltellers 5 ist eine Schliessfläche 13 angeordnet, wie in Figur 3 gezeigt. Diese Schliessfläche 13 weist in der gezeigten Ausrichtung des Ventils nach unten, also in Richtung zur Ventilöffnung 2. Diese Seite ist diejenige Seite des Ventiltellers, welche zum Verschliessen der Ventilöffnung 2 dient, weshalb sie im Folgenden als die Verschlussseite 6, dargestellt in Figur 3, bezeichnet wird. Die Schliessfläche 13 ist eine geschlossene, runde Platte, deren Querschnitt grösser ist als der Querschnitt der Ventilöffnung 3, wie in Figur 3 erkennbar. Mittels der Schliessfläche 13 kann also die Ventilöffnung 2 vollständig überdeckt werden, wobei die Schliessfläche 13 auf dem Ventilsitz 4 aufliegt, siehe Figur 3. Die Schliessfläche 13 ist in Richtung senkrecht zur Verschlussseite 6 relativ zum Ventilteller 5 innerhalb eines Bewegungsbereichs 14, dargestellt durch den Pfeil 14, bewegbar am Ventilteller 5 federnd gelagert. Die Federkraft wirkt nach unten, also in Richtung zum Ventilsitz 4 und zur Ventilöffnung 2. Durch diese relative Bewegbarkeit des Schliessfläche 13 relativ zum Ventilteller 5 ist es möglich, dass sich die Schliessfläche 13 im Falle eines relativen Überdrucks, der auf der oberen Seite, also auf der Seite des Ventiltellers 5 bzw. auf der Seite, zu welcher der Ventilsitz 4 weist, herrscht, auf dem Ventilsitz 4 abstützt. Somit wirkt eine derartige Druckdifferenz im Wesentlichen auf die Schliessfläche 13 und den Ventilsitz 4, kaum jedoch auf den restlichen Ventilteller 5 und den Antrieb 7.

Mittels des Antriebs 7, gezeigt in Figur 1, ist der Ventilteller 5 in Form einer Querbewegung x, die eine Schwenkbewegung darstellt, um eine im Wesentlichen parallel zur Öffnungsachse 3 verlaufende Schwenkachse 10 quer zur Ventilöffnung 2 und quer zur Öffnungsachse 3 schwenkbar. Ausserdem kann der Ventilteller 5 in Form einer Senkrechtbewegung y in Richtung senkrecht zur Verschlussseite 6 und senkrecht zur Querbewegung x bewegt werden. Die Senkrechtbewegung y ist eine Linearbewegung im Wesentlichen parallel zur Öffnungsachse 3. Der Ventilteller 5 kann mittels des Antriebs 7 zwischen einer Offenstellung O, gezeigt in Figur 1, und einer Geschlossenstellung C, gezeigt in Figur 3, verstellt werden. In der Offenstellung ist der Ventilteller 5 in einem seitlich neben der Ventilöffnung 2 angeordneten Parkabschnitt 8 des Ventilgehäuses 1 positioniert. Die Ventilöffnung 2 und der Fliessweg F werden vom Ventilteller 5 und dessen Schliessfläche 13 freigegeben. In der Offenstellung O ist der Verschlussteller quer aus dem Bereich der Ventilöffnung 2 herausgeschwenkt, so dass der Öffnungsquerschnitt vollständig freigegeben wird. Bei dem Parkabschnitt 8 handelt es sich um einen nach aussen geschlossenen Abschnitt im Inneren des Ventilgehäuses 1, seitlich neben der Ventilöffnung 2, wie in Figur 1 gezeigt. Zur besseren Darstellung ist der Deckel des Parkabschnitts 8 in Figur 1 entfernt, so dass der Ventilteller in seiner Offenstellung O im Parkabschnitt erkennbar ist. Im Betriebszustand ist der Parkabschnitt jedoch verschlossen. In der Geschlossenstellung, gezeigt in Figur 3, überdeckt der Ventilteller 5 mit der auf der Verschlussseite 6 angeordneten Schliessfläche 13 die Ventilöffnung 2.

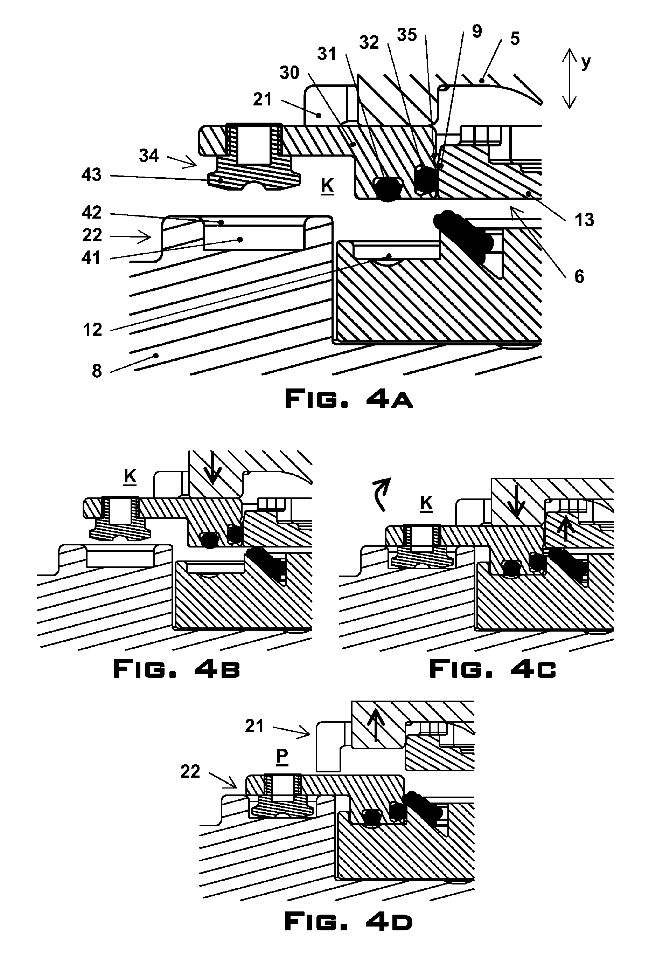

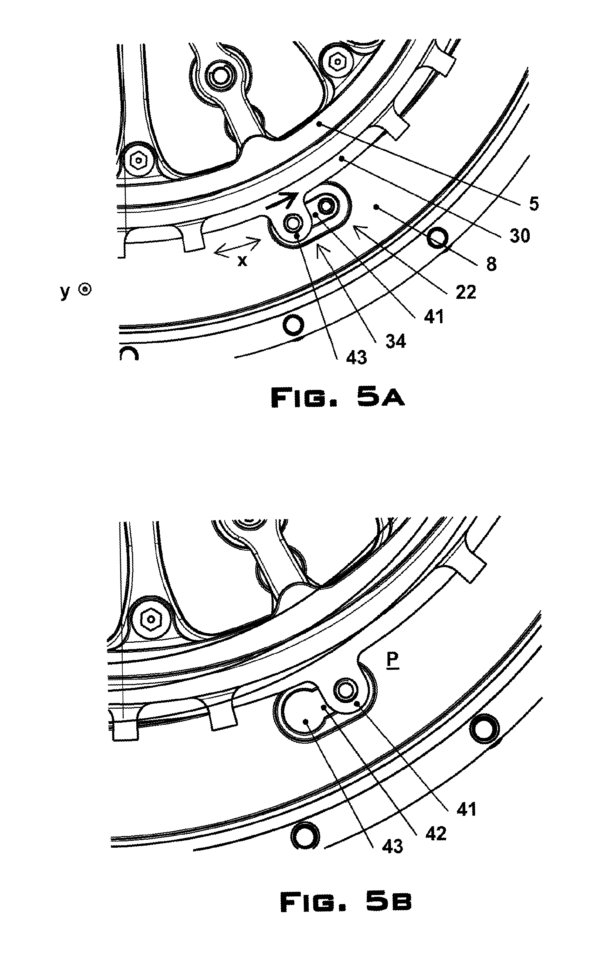

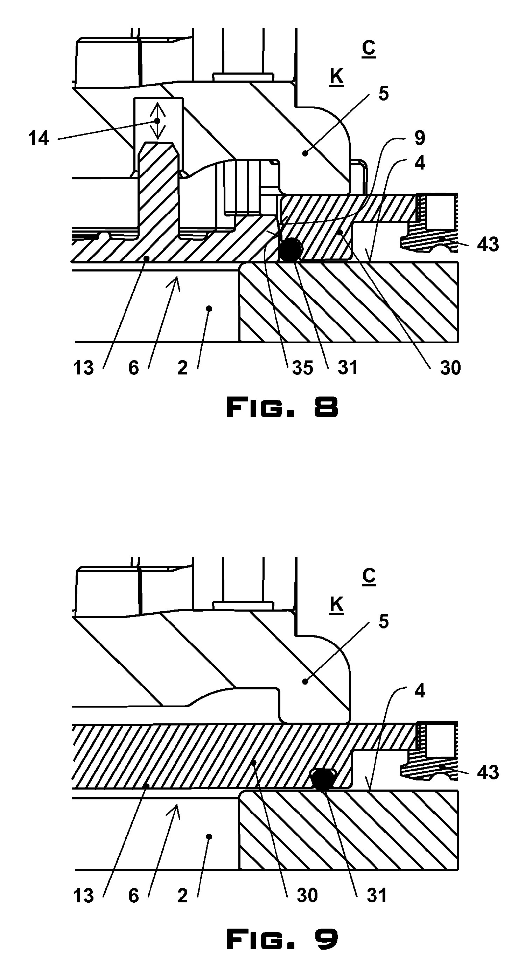

Das Ventil weist einen ringförmigen Dichtungsträger 30 mit einer die Schliessfläche 13 umschliessenden Grundform auf, gezeigt in Figur 3, der zwei typische Positionen einnehmen kann, nämlich eine Kopplungsposition K, Figur 3 und Figur 8, und eine Parkposition P, Figuren 4d und 5b. In der Kopplungsposition K ist der Dichtungsträger 30 am Ventilteller 5 gekoppelt, während er in der Parkposition P des Dichtungsträgers 30 mit dem Parkabschnitt 8 des Ventilgehäuses 1 gekoppelt ist.

Auf dem Dichtungsträger 30 ist eine als dynamische Dichtung wirkende erste Dichtung 31 derart angeordnet, dass die erste Dichtung 31 in der Kopplungsposition K und in der Geschlossenstellung C den Ventilsitz 4 gasdichtend berührt, wie in Figur 3 gezeigt. In der Kopplungsposition K besteht eine gasdichte Verbindung zwischen der ersten Dichtung 31 und der auf dem Ventilteller 5 angeordneten Schliessfläche 13. Hierzu weist das Ventil Dichtungsmittel 32 auf, die den Dichtungsträger 30 und die Schliessfläche 13 in der Kopplungsposition K gasdichtend verbinden. Die
Dichtungsmittel 32 sind auf einer zumindest teilweise radial nach innen weisenden Innenfläche 35 des Dichtungsträgers 30 derart angeordnet, dass die Dichtungsmittel 32 in der Kopplungsposition K eine radial nach aussen weisende Aussenfläche 9 der Schliessfläche 13 im Wesentlichen radial gasdichtend umschliessen, wie in Figur 3 gezeigt.

Wie bereits erwähnt ist die Schliessfläche 13 innerhalb eines Bewegungsbereichs 14 beweglich am Ventilteller 5 gelagert. Um die gasdichte Verbindung zwischen dem Dichtungsträger 30 und der Schliessfläche 13 in der Kopplungsposition K zu gewährleisten, ist die Aussenfläche 9 der Schliessfläche 13 derart dimensioniert, dass sie zumindest innerhalb eines Teilbereichs des Bewegungsbereichs 14 der Schliessfläche 13 von den Dichtungsmitteln 32 in der Kopplungsposition (K) gasdichtend umschlossen ist, wie ein Figur 3 gezeigt.

Die genannten Dichtungsmittel 32 werden im
Ausführungsbeispiel der Figuren 1 bis 7 von einer ringförmigen zweiten Dichtung 32 gebildet. Diese zweite Dichtung 32 ist auf einer radial nach innen weisenden Innenfläche 35 des Dichtungsträgers 30 angeordnet und weist nach innen in Radialrichtung. Die zweite Dichtung 32 umschliesst in der Kopplungsposition K die radial nach aussen weisende Aussenfläche 9 der Schliessfläche 13 im Wesentlichen radial gasdichtend, wie in Figur 3 gezeigt.

Anstelle dieser in Figur 3 dargestellten Ausführungsform mit zwei Dichtungen 31 und 32 ist es jedoch auch möglich, dass die Dichtungsmittel von der ersten Dichtung 31 gebildet wird, wie in einer alternativen Ausführungsform in Figur 8 gezeigt. Die Figur 8 korrespondiert zur Figur 3. In diesem Falle hat die erste Dichtung 31 eine Doppelfunktion. Hierzu ist die erste Dichtung 31 in einem inneren Randabschnitt der zumindest teilweise radial nach innen weisenden Innenfläche 35 des Dichtungsträgers 30 angeordnet. Sie berührt mit einem in Axialrichtung weisenden Teilabschnitt in der Geschlossenstellung C des Ventiltellers 5 den Ventilsitz 4 auf gasdichtende Weise, wie in Figur 8 gezeigt. Mit dem nach innen zumindest teilweise in Radialrichtung weisenden Teilabschnitt umschliesst die erste Dichtung 31 in der Kopplungsposition K die zumindest teilweise radial nach aussen weisende Aussenfläche 9 der Schliessfläche 13 auf im Wesentlichen radial gasdichtende Weise, wie ebenfalls in Figur 8 erkennbar.

Die Ausführungsbeispiele gemäss Figur 3 und Figur 8 sind gegeneinander austauschbar, das heisst, dass die restlichen beschriebenen Merkmale entsprechend anwendbar sind.

Befindet sich der Dichtungsträger 30 in Kopplungsposition K, kann das Ventil wie ein konventionelles Pendelventil betrieben werden. Der Ventilteller 7 ist mittels des Antriebs 7 zwischen der Offenstellung O, Figur 1, und einer Zwischenstellung durch die Querbewegung x schwenkbar. In der Zwischenstellung überdeckt der Ventilteller 5 mit der Verschlussseite 6 die Ventilöffnung 2, er ist in beabstandeter Gegenüberlage zum Ventilsitz 4 angeordnet und er verkleinert die Ventilöffnung 2, so dass der Fliessweg F teilweise unterbrochen ist. Durch die Senkrechtbewegung y des Antriebs 7 kann der Ventilteller 7 zwischen dieser Zwischenstellung und der gasdichten Geschlossenstellung C, Figuren 3 und 8, verstellt werden.

Ein Vorteil dieser konventionellen Betriebsart, bei welcher sich der Dichtungsträger 30 in Kopplungsposition K befindet, besteht darin, dass das Ventil gasdicht verschlossen werden kann. In vielen Anwendungsbereichen ist das vollständige Schliessen des Ventils jedoch nur gelegentlich erforderlich, da sich das Ventil hauptsächlich im sogenannten Regelungsbetrieb befindet, in welchem der Öffnungsquerschnitt verkleinert oder vergrössert, jedoch nicht vollständig verschlossen werden soll. Im Regelungsbetrieb wird die erste Dichtung 31 in der Kopplungsposition K des Dichtungsträgers 30 ständig dem Medium, welches das Ventil durchströmt, chemisch und mechanisch ausgesetzt, so dass es zu einem erhöhten Verschleiss der ersten Dichtung 31 kommen würde. Daher sieht die Erfindung vor, dass der Dichtungsträger 30 vom Ventilteller 5 entkoppelt und mit dem Parkabschnitt 8 des Ventilgehäuses 1 gekoppelt werden kann und die Parkposition P einnimmt.

Erfindungsgemäss ist Dichtungsträger 30 in der Kopplungsposition K des Dichtungsträgers 30 mit einer ersten Aufnahme 21 des Ventiltellers 5 am Ventilteller 5 und in der Parkposition P des Dichtungsträgers 30 mit einer zweiten Aufnahme 22 des Parkabschnitts 8 im Parkabschnitt 8 des Ventilgehäuses 1 koppelbar und wieder entkoppelbar. Um die lösbare Kopplung in der ersten Aufnahme 21 und in der zweiten Aufnahme 22 zu ermöglichen, besitzt das Ventil den jeweiligen Aufnahmen 21 und 22 zugeordnete Kopplungsmittel 33 und 34.

Mittels erster Kopplungsmittel 33 ist der Dichtungsträger 30 lösbar mit der ersten Aufnahme 21 des Ventiltellers 5 koppelbar und somit in der Kopplungsposition K lösbar fixierbar. Mittels zweiter Kopplungsmittel 34 ist der Dichtungsträger 30 lösbar mit der zweiten Aufnahme 22 des Parkabschnitts 8 koppelbar und somit in der Parkposition P lösbar fixierbar.

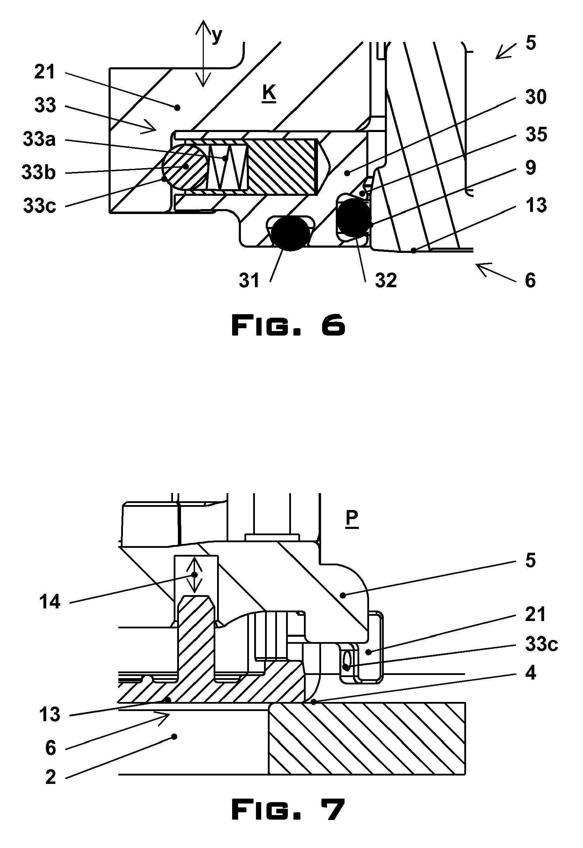

Die erste Aufnahme 21 des Ventiltellers 5 ist als translatorische erste Aufnahme 21 ausgebildet, wie in den Figuren 3, 4a, 4c, 4d, 6 und 7 gezeigt. Das heisst, dass durch eine geradlinige Bewegung des Ventiltellers 5 ein Aufnehmen des Dichtungsträgers 30 in die erste Aufnahme 21 erfolgt. Der Dichtungsträger 30 ist durch die Senkrechtbewegung y in die erste Aufnahme 21 in die Kopplungsposition K hinein und aus der Aufnahme 21 aus der Kopplungsposition K heraus führbar, siehe Figuren 4c und 4d. Um den Dichtungsträger 30 in der ersten Aufnahme 21 und somit in seiner Kopplungsposition K zu halten, sind die ersten Kopplungsmittel 33 vorgesehen, welche als kraftschlüssige erste Kopplungsmittel 33 ausgebildet sind, wie in der Figur 6 veranschaulicht. Die kraftschlüssigen ersten Kopplungsmittel 33 halten den Dichtungsträger 30 in der ersten Aufnahme 21 in der Kopplungsposition K mit einer Haltekraft bis zur Überwindung der Haltekraft, wobei die Haltekraft durch die Senkrechtbewegung y aus der Aufnahme 21 heraus zum Entkoppeln mittels des Antriebs 7 überwindbar ist. Im in Figur 6 gezeigten Ausführungsbeispiel sind diese kraftschlüssigen ersten Kopplungsmittel als federbelastete Raste 33 ausgebildet, die im Dichtungsträger 30 angeordnet ist. Die erste Aufnahme 21 wird von einer Vielzahl an rings um den Dichtungsträger 30 auf dem Ventilteller 5 angeordneten Fingern 21 gebildet, wie in Figur 7 erkennbar, welche den Ventilteller 5 ohne den Dichtungsträger 30 zeigt. In diesen Fingern 21 sind konkave, nach innen weisende Ausnehmungen 33c ausgeformt, siehe Figuren 6 und 7. Im Dichtungsträger 30 befindet sich eine der Anzahl der Finger 21 und der Ausnehmungen 33c entsprechende Anzahl an federbelasteten Rasten 33. Diese federbelasteten Rasten 33 setzen sich jeweils aus einer Feder 33a und einer von der Feder 33a mit Kraft beaufschlagten Kugel 33b zusammen. Die Kugel 33b hat eine mit der Ausnehmung 33c korrespondierende Form und wird durch die Feder 33a beim Einführen des Dichtungsträgers 30 in die erste Aufnahme 21 gedrückt, so dass der Dichtungsträger 30 kraftschlüssig mittels der als federbelastete Rasten ausgebildeten kraftschlüssigen ersten Kopplungsmittel 33 in der ersten Aufnahme 21 fixiert ist. Somit befindet sich der Dichtungsträger 30 in Kopplungsposition K. Das Entkoppeln des Dichtungsträgers 30 aus der ersten Aufnahme 21 ist in den Figuren 4c und 4d veranschaulicht. Der mittels der zweiten Kopplungsmittel 34 im Parkabschnitt 8 festgehalten Dichtungsträger 30 wird durch das senkrechte Verstellen des Ventiltellers 5 mittels der nach oben erfolgenden Senkrechtbewegung y, dargestellt durch den Pfeil in Figur 4d, durch den Antrieb 7 aus der erste Aufnahme 21 gezogen, indem die Haltekraft der federbelasteten Rasten 33 überwunden wird. Dies wird durch den Übergang von der Figur 4c zur Figur 4d veranschaulicht. Das Koppeln des Dichtungsträgers in die Kopplungsposition K erfolgt in umgekehrter Reihenfolge. Durch die beschriebene erste Aufnahme 21 und die ersten Kopplungsmittel 33 ist es also möglich, den - auf im Folgenden erläuterte Weise - am Ventilgehäuse 1 festgehaltenen Dichtungsträger 30 durch die Senkrechtbewegung y des Antriebs 7 vom Ventilteller 5 aus seiner Kopplungsposition K zu lösen.

Um den Dichtungsträger 30 am Ventilgehäuse im geschützten Parkabschnitt 8 lösbar in seiner Parkposition P fixieren zu können, sind die zweite Aufnahme 22 und die zweiten Kopplungsmittel 34, gezeigt in den Figuren 4a bis 5c, vorgesehen.

Im Parkabschnitt 8 des Ventilgehäuses 1 ist eine Schutzfläche 12 ausgeformt ist, die im Wesentlichen mit der Form der ersten Dichtung 31 des Dichtungsträgers 30 korrespondiert. Diese Schutzfläche 12 ist als nach oben in Richtung zur Verschlussseite 6 auf die Schliessfläche 13 weisende, ringförmige Nut im Parkabschnitt 8 des Ventilgehäuses 1 ausgeformt, wie in Figur 2 erkennbar. In Figur 2 ist die Abdeckung des Parkabschnitts 8 weitgehend entfernt, wodurch die im Ventilinneren liegende Schutzfläche 12 erkennbar ist.

Im Parkabschnitt 8 ist ausserdem die zweite Aufnahme 22 ausgeformt. Diese zweite Aufnahme 22, mittels welcher der Dichtungsträger 30 im Parkabschnitt aufnehmbar ist, bildet aufgrund ihrer vorteilhaften Ausgestaltung auch einen Teil zweiten Kopplungsmittel 34. Rings um die Schutzfläche 12 sind vier Einführungen 42 im Parkabschnitt 8 aufgeformt, wie in den Figuren 2, 5a und 5b erkennbar. Diese vier Einführungen 42 gehen jeweils in einen Schlitz 41 über, der sich entlang der Richtung der Querbewegung x, siehe Figur 1, erstreckt. Die Einführungen 42 bilden funktional die zweite Aufnahme 22.

Korrespondierend zu den vier Einführungen 42 und Schlitzen 41 sind auf dem Dichtungsträger vier Knöpfe 43 angeordnet, siehe Figuren 4a, 5a und 5b. Die Knöpfe 43 des Dichtungsträgers 30 sind durch die Senkrechtbewegung y des Antriebs 7 in die Einführungen 42 einführbar. Das Einführen wird durch den Übergang von der Figur 4a zur Figur 4b und von der Figur 4b zur Figur 4c dargestellt. Sind die Knöpfe 43 des Dichtungsträgers 30 durch die Senkrechtbewegung y des Antriebs 7 in die Einführungen 42 eingeführt, Figuren 4c und 5a, können diese Knöpfe 43 mittels des Antriebs 7 durch die Querbewegung x in den Schlitz 41 und somit in einen Hinterschneidungsbereich geführt werden, wie durch den Übergang von Figur 5a zur Figur 5b gezeigt. In diesem Hinterschneidungsbereich wird der Dichtungsträger 30 in Richtung der Senkrechtbewegung y festgehalten. Wird der Antrieb 7 nun in Richtung der Senkrechtbewegung y verstellt, wie oben beschrieben und in Figur 4d gezeigt, kann der Dichtungsträger 30 diese Senkrechtbewegung y nicht mitmachen, sondern bleibt in der zweiten Aufnahme 22 fixiert. Somit löst sich der Dichtungsträger 30 vom Ventilteller 5 und von der ersten Aufnahme 21, da die kraftschlüssigen ersten Kopplungsmittel 33 die Verbindung zwischen Dichtungsträger 30 und Ventilteller 5 lösen. Der Zustand, in welchem sich der Dichtungsträger 30 in diesem Hinterschneidungsbereich befindet, ist die Parkposition P.

In anderen Worten sind die zweiten Kopplungsmittel 34 als Bajonettverschluss mit vier Schlitzen 41, die jeweils eine Einführung 42 haben, im Parkabschnitt 8 und vier Knöpfen 43 auf dem Dichtungsträger 30 ausgebildet. Der Bajonettverschluss ist derart angeordnet und ausgebildet, dass die vier Knöpfe 43 durch die Senkrechtbewegung y in die Einführung 42 einführbar und durch die Querbewegung x in die vier Schlitze 41 führbar sind. Der Dichtungsträger 30 kann somit in die Parkposition P gebracht werden. Die zweite Aufnahme 22 des Parkabschnitts 8 ist also derart ausgebildet, dass der Dichtungsträger 30 zumindest teilweise durch die Senkrechtbewegung y in die zweite Aufnahme 22 in die Parkposition P hinein und aus der zweiten Aufnahme 22 aus der Parkposition (P) heraus führbar ist. Das Koppeln und Entkoppeln des Dichtungsträgers 30 in die und aus der Kopplungsposition K und Parkposition P erfolgt zumindest teilweise durch die Senkrechtbewegung y und durch die Querbewegung x. Die ersten Kopplungsmittel 33, die erste Aufnahme 21, die zweiten Kopplungsmittel 34 und die zweite Aufnahme 22 sind also im gezeigten Ausführungsbeispiel derart ausgebildet, dass das Koppeln des Dichtungsträgers 30 in der Kopplungsposition K und der Parkposition P und das Entkoppeln durch ein Bewegen des Ventiltellers 5 mittels des Antriebs 7 erfolgen.

In der Parkposition P des Dichtungsträgers 30 wird die erste Dichtung 31 von der Schutzfläche 12 zum Schutz der ersten Dichtung 31 vor dem entlang dem Fliessweg F strömenden Medium umgeben. Somit ist die erste Dichtung 31 in der Parkposition P vor chemischen und abrasiven sowie sonstigen mechanischen Einflüssen geschützt. Das Ventil kann in dieser Betriebsart nun im sogenannten Regelungsbetrieb betrieben werden, wobei der Ventilteller 5 mit dessen Schliessfläche 13 bereits ein weitgehendes Schliessen, jedoch nicht vollständig gasdichtes Schliessen der Ventilöffnung 2 durch Verstellen des Ventiltellers 5 durch die Querbewegung x und die Senkrechtbewegung y mittels des Antriebs 7 ermöglicht. In Figur 7 ist der Ventilteller 5 ohne den Dichtungsträger 30, der sich in Parkposition P im Parkabschnitt 8 befindet, gezeigt. Wie erkennbar ist auch ohne den Dichtungsträger 30 ein Schliessen der Ventilöffnung 2 durch die auf dem Ventilsitz 4 aufliegenden Schliessfläche 13 möglich, jedoch ist keine gasdichte Abdichtung aufgrund der fehlenden Dichtung gewährleistet. Dies ist jedoch bei einem Grossteil der Einsatzzeit des Ventils bei vielen Anwendungen auch nicht erforderlich.

Das gezeigte Ventil hat ausserdem eine integrierte Steuervorrichtung 50 für den Antrieb 7, gezeigt in Figur 1. Diese Steuervorrichtung 50 steht derart mit dem Antrieb 7 in Verbindung und ist derart ausgebildet, dass das Ventil in einer ersten Betriebsart und einer zweiten Betriebart betreibbar ist. In der ersten Betriebsart ist der Dichtungsträger 30 in der Parkposition P angeordnet und der Ventilteller 5 ist zwischen der Offenstellung O und einer Zwischenstellung, in welcher der Ventilteller 5 mit der Verschlussseite 6 die Ventilöffnung 2 zumindest teilweise überdeckt, in beabstandeter Gegenüberlage zum Ventilsitz 4 angeordnet ist und in welcher der Ventilteller 5 die Ventilöffnung 2 verkleinert und den Fliessweg (F) teilweise unterbricht, verstellbar. In der zweiten Betriebsart ist der Dichtungsträger 30 in der Kopplungsposition K angeordnet und der Ventilteller 5 ist zwischen der Offenstellung O und der Geschlossenstellung C verstellbar. Das Koppeln des Dichtungsträgers 30 in der Kopplungsposition K und der Parkposition P und das Entkoppeln, also der Übergang von der einen zur anderen Betriebsart, erfolgt durch ein Ansteuern des Antriebs 7 zum Verstellen des Ventiltellers 5 auf die oben beschrieben Weise.

Die in den Figuren 1 bis 7 sowie der Figur 8
veranschaulichten und erläuterten konkreten
Ausführungsbeispiele dienen lediglich zur exemplarischen Veranschaulichung der Erfindung anhand schematischer Darstellungen. Selbstverständlich beschränkt sich die Erfindung nicht auf diese Ausführungsbeispiele und deren Merkmalskombinationen. So ist es beispielsweise im Rahmen der Erfindung auch möglich, dass die Schliessfläche 13 auf dem Dichtungsträger 30 angeordnet ist und ein unmittelbarer gasdichter Kontakt zwischen der ersten Dichtung 31 und der Schliessfläche 13 besteht. Der Dichtungsträger 30 weist in diesem Fall insbesondere einen tellerförmigen Querschnitt auf. Eine solche Ausführung ist in der Figur 9 dargestellt. Auf eine zweite Dichtung kann hierbei verzichtet werden. Die restlichen Merkmale entsprechen denen der vorangegangenen Ausführungsbeispiele. Ausserdem ist es möglich, die funktional zu verstehenden Merkmale in Form eines einzigen Elements, welches diese funktionalen Merkmale aufweist, umzusetzen, und umgekehrt. So ist es beispielsweise möglich, dass die erste Aufnahme 21 des Ventiltellers 5 durch die zumindest teilweise radial nach aussen weisende Aussenfläche 9 der Schliessfläche 13 gebildet wird und die kraftschlüssigen ersten Kopplungsmittel 33 durch die Dichtungsmittel 31 oder 32, insbesondere durch die zweite Dichtung 32 aus dem ersten Ausführungsbeispiel gemäss Figuren 1 bis 7 oder die ersten Dichtung 31 aus dem zweiten Ausführungsbeispiel gemäss Figur 8, gebildet werden. Die Dichtungen 31 bzw. 32 sind in Radialrichtung elastisch, so dass diese Dichtungsmittel 31 bzw. 32 die Aussenfläche 9 der Schliessfläche 13 in der Kopplungsposition K derart elastisch umschliessen, dass der Dichtungsträger 30 lösbar in der Kopplungsposition K fixierbar ist. In diesem Fall können die in Figur 6 beschriebenen ersten Kopplungsmittel 33 sowie die erste Aufnahme 21 entfallen. Die restlichen Merkmale können unverändert bleiben.

## Patentansprüche

1. Ventil zum im Wesentlichen gasdichten Unterbrechen eines Fliesswegs (F), mit
• einem Ventilgehäuse (1),
• einer Ventilöffnung (2) im Ventilgehäuse (1) für den Fliessweg (F) mit einer Öffnungsachse (3),
• einem Ventilsitz (4), der die Ventilöffnung (2) umschliesst,
• einem Ventilteller (5) mit einer Verschlussseite (6),
• mindestens einem Antrieb (7), mittels welchem der Ventilteller (5) zwischen
- einer Offenstellung (O), in welcher der Ventilteller (5) in einem seitlich neben der Ventilöffnung (2) angeordneten Parkabschnitt (8) des Ventilgehäuses (1) positioniert ist und die Ventilöffnung (2) und den Fliessweg (F) freigibt, und
- einer Geschlossenstellung (C), in welcher
• der Ventilteller (5) mit einer auf der Verschlussseite (6) angeordneten Schliessfläche (13) die Ventilöffnung (2) überdeckt,
• eine erste Dichtung (31) den Ventilsitz (4) gasdichtend berührt und
• der Ventilteller (5) die Ventilöffnung (2) gasdicht
schliesst und den Fliessweg (F) unterbricht, mittels einer zumindest teilweise quer zur Öffnungsachse (3) erfolgenden Querbewegung (x) schwenkbar oder verschiebbar ist,
**gekennzeichnet durch**
einen Dichtungsträger (30), der
• in einer Kopplungsposition (K) des Dichtungsträgers (30) mit einer ersten Aufnahme (21) des Ventiltellers (5) am Ventilteller (5) und
• in einer Parkposition (P) des Dichtungsträgers (30) mit einer zweiten Aufnahme (22) des Parkabschnitts (8) im Parkabschnitt (8) des Ventilgehäuses (1) koppelbar und wieder entkoppelbar ist, wobei
• die erste Dichtung (31) derart auf dem Dichtungsträger (30) angeordnet ist, dass die erste Dichtung (31) in der Kopplungsposition (K) und in der Geschlossenstellung (C) den Ventilsitz (4) gasdichtend berührt, wobei zumindest in der Kopplungsposition (K) und in der Geschlossenstellung (C) eine gasdichte Verbindung zwischen der ersten Dichtung (31) und der Schliessfläche (13) besteht,
• das Ventil erste Kopplungsmittel (33) aufweist, mittels welcher der Dichtungsträger (30) lösbar mit der ersten Aufnahme (21) des Ventiltellers (5) koppelbar und somit in der Kopplungsposition (K) fixierbar ist, und
• das Ventil zweite Kopplungsmittel (34) aufweist, mittels welcher der Dichtungsträger (30) lösbar mit der zweiten Aufnahme (22) des Parkabschnitts (8) koppelbar und somit in der Parkposition (P) fixierbar ist.

2. Ventil nach Anspruch 1, wobei
die ersten Kopplungsmittel (33), die erste Aufnahme (21), die zweiten Kopplungsmittel (34) und die zweite Aufnahme (22) derart ausgebildet sind, dass das Koppeln des Dichtungsträgers (30) in der Kopplungsposition (K) und der Parkposition (P) und das Entkoppeln durch ein Bewegen des Ventiltellers (5) mittels des Antriebs (7) erfolgen.

3. Ventil nach Anspruch 2, wobei
• der Antrieb (7) derart ausgebildet ist, dass der Ventilteller (5) zumindest in der Offenstellung (O) in Form einer Senkrechtbewegung (y) in Richtung senkrecht zur Verschlussseite (6) bewegbar ist und
• das Koppeln und Entkoppeln des Dichtungsträgers (30) in die und aus der Kopplungsposition (K) und Parkposition (P) zumindest teilweise durch die Senkrechtbewegung (y) erfolgt.

4. Ventil nach Anspruch 3, wobei
die zweite Aufnahme (22) des Parkabschnitts (8) derart ausgebildet ist, dass der Dichtungsträger (30) zumindest teilweise durch die Senkrechtbewegung (y) in die zweite Aufnahme (22) in die Parkposition (P) hinein und aus der zweiten Aufnahme (22) aus der Parkposition (P) heraus führbar ist.

5. Ventil nach Anspruch 4, wobei
die zweiten Kopplungsmittel (34) als Bajonettverschluss mit mindestens einem Schlitz (41), der eine Einführung (42) hat, und mindestens einem Knopf (43) ausgebildet sind, wobei der Bajonettverschluss derart angeordnet und ausgebildet ist, dass der Knopf (43) durch die Senkrechtbewegung (y) in die Einführung (42) einführbar und durch die Querbewegung (x) in den Schlitz (41) und somit in die Parkposition (P) führbar ist.

6. Ventil nach einem der Ansprüche 3 bis 5, wobei
die erste Aufnahme (21) des Ventiltellers (5) als translatorische erste Aufnahme (21) ausgebildet ist, wobei der Dichtungsträger (30) durch die Senkrechtbewegung (y) in die erste Aufnahme (21) in die Kopplungsposition (K) hinein und aus der Aufnahme (21) aus der Kopplungsposition (K) heraus führbar ist.

7. Ventil nach Anspruch 6, wobei
die ersten Kopplungsmittel (33) als kraftschlüssige erste Kopplungsmittel (33) ausgebildet sind, die den Dichtungsträger (30) in der ersten Aufnahme (21) in der Kopplungsposition (K) mit einer Haltekraft bis zur Überwindung der Haltekraft halten, wobei die Haltekraft durch die Senkrechtbewegung (y) aus der Aufnahme (21) heraus zum Entkoppeln mittels des Antriebs (7) überwindbar ist.

8. Ventil nach Anspruch 7, wobei
die kraftschlüssigen ersten Kopplungsmittel als federbelastete Raste (33), die im Dichtungsträger (30) oder in der ersten Aufnahme (21) angeordnet ist, ausgebildet ist.

9. Ventil nach einem der Ansprüche 1 bis 8, wobei
• die Schliessfläche (13) auf dem Dichtungsträger (30) angeordnet ist und
• ein gasdichter Kontakt zwischen der ersten Dichtung (31) und der Schliessfläche (13) besteht.

10. Ventil nach einem der Ansprüche 1 bis 8, wobei
• die Schliessfläche (13) auf dem Ventilteller (5) angeordnet ist und
• das Ventil Dichtungsmittel (31; 32) aufweist, die den Dichtungsträger (30) und die Schliessfläche (13) in der Kopplungsposition (K) und in der Geschlossenstellung (C) gasdichtend verbinden.

11. Ventil nach Anspruch 10, wobei
• die Dichtungsmittel (31;32) auf einer zumindest teilweise radial nach innen weisenden Innenfläche (35) des Dichtungsträgers (30) derart angeordnet sind, dass die Dichtungsmittel (31; 32) in der Kopplungsposition (K) eine zumindest teilweise radial nach aussen weisende Aussenfläche (9) der Schliessfläche (13) im Wesentlichen radial gasdichtend umschliessen.

12. Ventil nach Anspruch 11, wobei
• die Schliessfläche (13) in Richtung senkrecht zur Verschlussseite (6) relativ zum Ventilteller (5) und in der Kopplungsposition (K) relativ zum Dichtungsträger (30) innerhalb eines Bewegungsbereichs (14) bewegbar am Ventilteller (5) - insbesondere federnd - gelagert ist und
• die Aussenfläche (9) der Schliessfläche (13) derart dimensioniert ist, dass sie zumindest innerhalb eines Teilbereichs des Bewegungsbereichs (14) der Schliessfläche (13) von den Dichtungsmitteln (31; 32) in der Kopplungsposition (K) gasdichtend umschlossen ist.

13. Ventil nach Anspruch 7, wobei
• die Schliessfläche (13) auf dem Ventilteller (5) angeordnet ist
• das Ventil Dichtungsmittel (31; 32) aufweist, die den Dichtungsträger (30) und die Schliessfläche (13) in der Kopplungsposition (K) und in der Geschlossenstellung (C) gasdichtend verbinden und
• die Dichtungsmittel (31;32) auf einer zumindest teilweise radial nach innen weisenden Innenfläche (35) des Dichtungsträgers (30) derart angeordnet sind, dass die Dichtungsmittel (31; 32) in der Kopplungsposition (K) eine zumindest teilweise radial nach aussen weisende Aussenfläche (9) der Schliessfläche (13) im Wesentlichen radial gasdichtend umschliessen,
• die erste Aufnahme (21) des Ventiltellers (5) durch die zumindest teilweise radial nach aussen weisende Aussenfläche (9) der Schliessfläche (13) gebildet wird, und
• die kraftschlüssigen ersten Kopplungsmittel (33) durch die Dichtungsmittel (31; 32), die in Radialrichtung elastisch sind, gebildet werden, wobei die Dichtungsmittel (31; 32) die Aussenfläche (9) der Schliessfläche (13) in der Kopplungsposition (K) derart elastisch umschliessen, dass der Dichtungsträger (30) lösbar in der Kopplungsposition (K) fixierbar ist.

14. Ventil nach einem der Ansprüche 10 bis 13, wobei die Dichtungsmittel
• von einer zweiten Dichtung (32),
- die auf einer zumindest teilweise radial nach innen weisenden Innenfläche (35) des Dichtungsträgers (30) angeordnet ist und zumindest teilweise nach innen in Radialrichtung weist, und
- die in der Kopplungsposition (K) eine zumindest teilweise radial nach aussen weisende Aussenfläche (9) der Schliessfläche (13) im Wesentlichen radial gasdichtend umschliesst,
oder
• von der ersten Dichtung (31),
- die in einem inneren Randabschnitt einer zumindest teilweise radial nach innen weisenden Innenfläche (35) des Dichtungsträgers (30) angeordnet ist,
- die mit einem in Axialrichtung weisenden Teilabschnitt in der Geschlossenstellung (C) des Ventiltellers (5) den Ventilsitz (4) gasdichtend berührt und
- die mit einem nach innen zumindest teilweise in Radialrichtung weisenden Teilabschnitt in der Kopplungsposition (K) eine zumindest teilweise radial nach aussen weisende Aussenfläche (9) der Schliessfläche (13) im Wesentlichen radial gasdichtend umschliesst,
gebildet werden.

15. Ventil nach einem der Ansprüche 3 bis 8 oder 13, wobei das Ventil als eines der folgenden Ventiltypen ausgebildet ist:
• Pendelventil, wobei
- die Ventilöffnung (2) und der Ventilteller (5) einen im Wesentlichen runden Querschnitt aufweisen,
- der Dichtungsträger (30) einen ringförmigen oder tellerförmigen Querschnitt aufweist,
- die Querbewegung (x) eine Schwenkbewegung um eine im Wesentlichen parallel zur Öffnungsachse (3) verlaufende Schwenkachse (10) ist,
- die Senkrechtbewegung (y) eine Linearbewegung im Wesentlichen parallel zur Öffnungsachse (3) ist,
- der Ventilteller (7) mittels des Antriebs (7) zwischen der Offenstellung (O) und einer Zwischenstellung, in welcher der Ventilteller (5) mit der Verschlussseite (6) die Ventilöffnung (2) zumindest teilweise überdeckt, in beabstandeter Gegenüberlage zum Ventilsitz (4) angeordnet ist und in welcher der Ventilteller (5) die Ventilöffnung (2) verkleinert und den Fliessweg (F) teilweise unterbricht, durch die Querbewegung (x) schwenkbar ist und
- der Ventilteller (7) mittels des Antriebs (7) zwischen der Zwischenstellung und der Geschlossenstellung (C) durch die Senkrechtbewegung (y) verstellbar ist;
• Schieberventil, wobei
- die Ventilöffnung (2) und der Ventilteller (5) einen im Wesentlichen rechteckigen Querschnitt aufweisen,
- der Dichtungsträger (30) einen rechteckig rahmenartigen oder rechteckig geschlossenen Querschnitt aufweist,
- die Querbewegung (x) eine Linearbewegung entlang einer im Wesentlichen senkrecht zur Öffnungsachse (3) verlaufende Schubachse ist,
- die Senkrechtbewegung (y) eine Linearbewegung im Wesentlichen parallel zur Öffnungsachse (3) ist,
- der Ventilteller (7) mittels des Antriebs (7) zwischen der Offenstellung (O) und einer Zwischenstellung, in welcher der Ventilteller (5) mit der Verschlussseite (6) die Ventilöffnung (2) zumindest teilweise überdeckt, in beabstandeter Gegenüberlage zum Ventilsitz (4) angeordnet ist und in welcher der Ventilteller (5) die Ventilöffnung (2) verkleinert und den Fliessweg (F) teilweise unterbricht, durch die Querbewegung (x) verschiebbar ist und
- der Ventilteller (7) mittels des Antriebs (7) zwischen der Zwischenstellung und der Geschlossenstellung (C) durch die Senkrechtbewegung (y) verstellbar ist.

16. Ventil nach einem der Ansprüche 1 bis 15, mit einer Steuervorrichtung (50), die derart mit dem Antrieb (7) in Verbindung steht und derart ausgebildet ist, dass das Ventil in einer ersten Betriebsart und einer zweiten Betriebart betreibbar ist, wobei
• in der ersten Betriebsart der Dichtungsträger (30) in der Parkposition (P) angeordnet ist und der Ventilteller (5) zwischen der Offenstellung (O) und einer Zwischenstellung, in welcher der Ventilteller (5) mit der Verschlussseite (6) die Ventilöffnung (2) zumindest teilweise überdeckt, in beabstandeter Gegenüberlage zum Ventilsitz (4) angeordnet ist und in welcher der Ventilteller (5) die Ventilöffnung (2) verkleinert und den Fliessweg (F) teilweise unterbricht, verstellbar ist und
• in der zweiten Betriebsart der Dichtungsträger (30) in der Kopplungsposition (K) angeordnet ist und der Ventilteller (5) zwischen der Offenstellung (O) und der Geschlossenstellung (C) verstellbar ist.

17. Ventil nach einem der Ansprüche 1 bis 16, wobei im Parkabschnitt (8) eine Schutzfläche (12) derart ausgeformt ist, dass die erste Dichtung (31) in der Parkposition (P) des Dichtungsträgers (30) von der Schutzfläche (12) - zum Schutz der ersten Dichtung (31) vor dem entlang dem Fliessweg (F) strömenden Medium - umgeben ist.
